(19) Europäisches Patentamt
European Patent Office
Office européen des brevets

(11) **EP 3 256 830 B1**

(12) **EUROPEAN PATENT SPECIFICATION**

(45) Date of publication and mention
of the grant of the patent:
**04.12.2019 Bulletin 2019/49**

(21) Application number: **16713986.4**

(22) Date of filing: **10.02.2016**

(51) Int Cl.:
***G01L 5/28*** *(2006.01)*        ***G01M 17/04*** *(2006.01)*

(86) International application number:
**PCT/IB2016/050687**

(87) International publication number:
**WO 2016/128899 (18.08.2016 Gazette 2016/33)**

(54) **MULTI-PLATE APPARATUS AND METHOD FOR CHECKING THE BRAKING SYSTEM OF LAND VEHICLES WITH AT LEAST TWO AXLES**

VORRICHTUNG UND VERFAHREN FÜR DIE PRÜFUNG VON BREMSSYSTEMEN VON LANDFAHRZEUGEN MIT MINDESTENS ZWEI ACHSEN

APPAREIL MULTI-PLATE ET PROCEDE DE VERIFICATION DU SYSTEME DE FREINAGE DE VÉHICULES TERRESTRES AVEC AU MOINS DEUX AXES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.02.2015  IT VA20150002**

(43) Date of publication of application:
**20.12.2017  Bulletin 2017/51**

(73) Proprietor: **Vamag S.r.l.**
**21012 Cassano Magnago (VA) (IT)**

(72) Inventors:
• **CROSTA, Gianfranco**
**21012 Cassano Magnago (VA) (IT)**

• **RATTI, Alessandro**
**21012 Cassano Magnago (VA) (IT)**

(74) Representative: **Faggioni, Carlo Maria et al**
**Fumero S.r.l.**
**Pettenkoferstrasse 20/22**
**80336 München (DE)**

(56) References cited:
**EP-A2- 0 145 057     US-A- 5 305 636**
**US-A- 5 979 230**

• **Pankaj Pokhriyal: "Automotive Design", , 25 April 2012 (2012-04-25), XP055479220, Retrieved from the Internet: URL:http://web.iitd.ac.in/~achawla/public_ html/736/17-brakes.pdf [retrieved on 2018-05-29]**

**Description**

Field of the Invention

The present invention relates to an apparatus and a method for checking the braking system in land vehicles with rubber treaded wheels; more in particular, the apparatus for the checking of the braking system is suited to vehicles with more than two axles.

Background Art

The safety of a road vehicle depends on the control ability thereof, in particular on the ability thereof to stop, especially in emergency conditions.

A running vehicle is braked by the force which develops between the wheels thereof and the road surface; such force is generated due to the effect of the friction developed when each wheel is in turn broken down by the (disc or drum) braking system of the vehicle.

The braking ability of a vehicle hence depends on the correct combination of multiple elements.

- the timely application of the correct action on the elements (drums or discs) which define the braking system;
- the reaction mode of the vehicle chassis and of the corresponding suspension members,
- the presence of suitable friction between the wheel and the road surface.

The present invention deals with the check of the correct operation of the braking system on the whole, hence with reference not only to the operation thereof in stationary conditions, but also to the actual interactions which show up with the vehicle chassis and with the ground in dynamic conditions.

The rules provide a periodic check of the braking ability of vehicles. Two apparatuses currently exist for determining braking efficiency: a rollers apparatus and a platform system. The former of the two provides motor-driven rollers, which drive the vehicle wheels into rotation; actuating the braking system, a resistant torque is produced on the axle which drives the rollers: measuring such torque it is possible to obtain the braking force of the system. The latter provides floating instrumented "plates", overall referred to as platforms, wherein it is possible to measure both the vertical force applied onto the platform (action of the actual or apparent weight of the vehicle), and the horizontal force (vehicle motion and braking forces).

The roller system has the advantage of a greater repeatability in the measuring, it is more compact and less expensive; however, it allows to perform a measuring of the braking force in an extremely "synthetic" and theoretical manner. As a matter of fact, in a real situation, when the vehicle brakes, due to the effect of the behaviour of the chassis and of the dampeners, there is a change of the distribution of the weights which alters also the dynamics of the braking: this effect is completely neglected in the measuring performed by the rollers.

The platform system - despite being less repeatable and also bulkier and more expensive - allows, however, to simulate in a more precise manner the dynamics of the actual braking, including the load displacement effects onto the individual wheels.

Moreover, when a vehicle brakes on the road, the braking efficiency depends on the sum of the efficiencies of each individual wheel, and braking safety also depends on the correct balancing of such forces: this condition is detectable only with the platform system.

A prior art example is described in US5305636. It relates to a system for the checking of the braking features of a vehicle, which uses resting plates with both static and dynamic weight sensors and which read vertical and horizontal forces. In the case in which the axles are more than two, it is provided that the number of plates may vary to be able to read multiple axles at the same time, but no indication is provided about how such plates must be positioned. An evolution of this system by the same inventor is described in US5979230: here it is provided to arrange a pair of plates at a preset distance to detect multiple axles of a long vehicle; preferred techniques are suggested which impose vehicle entry and exit speeds on the system. The axles in any case are detected individually.

None of the above-listed systems is per se capable of detecting the time relationship between the braking actions of the various axles of a vehicle, nor to distinguish the effect produced by the single axle. For such reason, these prior art systems generically provide that the wheel axles remain on the same detection plate during the braking action. In the last analysis, that limits the test speed of the vehicle and forces to build the plates sufficiently long to house the entire braking space.

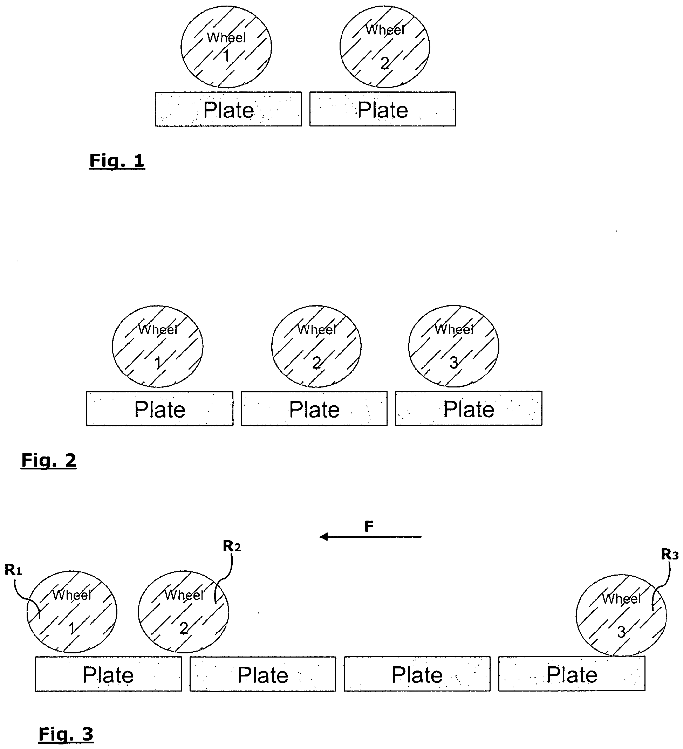

In some cases, to deal with multiple-axles vehicles, it has been explicitly suggested to use a multiple-plate system, wherein - as natural evolution of the above-said systems - a detection plate is installed for each braking wheel (see the table of fig. 1, which exemplifyingly refers to a two-axle vehicle and fig. 2, which refers to a three-axle vehicle).

As in the above-said US'636 and US'230, during operation, typically each plate detects exclusively its own relevant axle, for which it has been suitably arranged and positioned.

However, due to the large variability in the wheel base of vehicles, but especially of heavy, multiple-axles vehicles, it is impossible to build a multiple-plate system which is suitable for any type of vehicle, except a continuous path of small detection plates is defined, said plates being arranged at a close distance to each other, as contemplated in US6481298, which is economically burdensome.

In the table proposed in fig. 3, for example it is contemplated a case of a platform system with four plates in succession, which, however, is not suitable for the above-lying three-axle vehicle: as a matter of fact, it can be seen that the wheels of two axles, $R_1$ and $R_3$, rest on the two extreme plates $P_4$ and $P_1$, respectively, but the wheel of a third axle $R_2$ rests across the two plates $P_4$ and $P_3$. In this circumstance, the conventional platform system would provide an incorrect reading of the braking forces.

Please notice furthermore that a punctual detection on the individual axles without the opportunity of a detection of the forces on the entire vehicle precludes the opportunity of making further considerations on the state of health of the vehicle on the whole.

Brief Description of the Invention

The object of the present invention is to provide a multi-platform system which allows to overcome the described problems and, in particular, to allow the check of the braking system on land vehicles with more than two wheel axles, exceeding the limits of the specific inter-axle distances.

In particular, it is desired to obtain a detection of the forces which overall act on the entire vehicle system, to be able to obtain further indications on the general state of operation of the resting system on the ground of the vehicle, including the braking system, wheels and dampening system.

Such objects are achieved with a multi-platform system having the features indicated in the attached main claims. The dependent claims describe other preferential features of the invention.

Brief Description of the Drawings

Further features and advantages of the invention are in any case more evident from the following detailed description of preferred embodiments, given purely as a non-limiting example and illustrated in the attached drawings, wherein:

fig. 1, as mentioned, is a prior-art platform layout, which provides the support of two wheels onto two respective plates;
fig. 2, as mentioned, is a similar layout to that of fig. 1 which provides the support of three wheels onto three respective plates;
fig. 3 is another prior-art platform layout, which illustrates the interaction between four plates in succession and three wheels, one of which across two plates;
fig. 4 is a system layout according to an embodiment of the invention, employing four plates, in the initial entry-speed-measuring step;
fig. 5 is a similar layout to that of fig. 4 in an initial step of the measuring test on a three-axle vehicle;
fig. 6 is a layout similar to that of fig. 4 in the final step of the measuring test, which shows the displacement of part of the axles from one plate to the other;

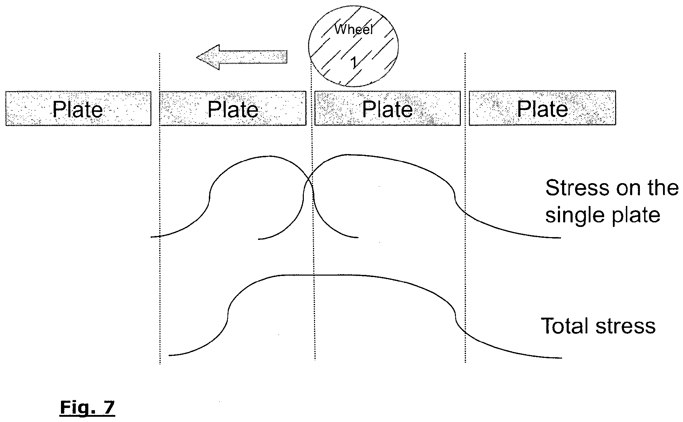

fig. 7 shows an integration diagram of measurements on an axle which, in the braking step, runs from one plate to the subsequent one;
fig. 8 is a schematic perspective view of an exemplifying system of the invention;
fig. 9 is a kinematic diagram of the vehicle with the dampeners and wheels thereof;
fig. 10 is a diagram of the detected forces depending on the time in which the parameters are reported which are acquired according to a preferred embodiment of the invention; and
figs. 11 and 12 are two diagrams relating to detection of the oscillations of the forces measured over time for an efficient system and for one in which the front dampener is inefficient, respectively.

Detailed Description of Preferred Embodiments

A checking system of a braking system consists of a plurality of detection plates, aligned according to a testing direction (that is, the motion direction of the vehicle) on two parallel paths arranged at a typical crosswise distance, equal to the average of the wheel track of the vehicles to be checked.

Each detection plate, in a way known per se, comprises an upper resting plate mounted integral with a support frame which is housed above or within a seat embedded in the reference plane (that is, the vehicle running ground). The upper plate hence ends flush with the reference plane or it has ascending/descending slides, so that the vehicle wheels can go thereon continuously. For such purpose, the upper surfaces of the plates must be mutually coplanar with a maximum tolerance of +/-5 mm. Preferably the resting surface of the plates must have a friction coefficient equal to at least 0.6 even in wet conditions.

A connection mechanism between the plate and the frame defines a detection device of the stresses acting on the plate, for example through a suitable arrangement of strain gauges.

The detection device of each plate is furthermore configured for detecting both vertical stresses, hence mainly the weight acting on the plate, and horizontal stresses. Horizontal stresses are substantially attributable to the horizontal force generated by the vehicle, through the tyres, due to the ascending movement thereof onto the plate and of subsequent braking.

The length of these plates is fixed and is optimised, based on the average of the circulating vehicle fleet, so that:

- two adjacent axles of the vehicle can never find themselves simultaneously on the same plate;
- the number of plates, at least equal to three, is the least possible in connection with the maximum length of the vehicle to be measured, taking into account that it is necessary to "cover" also an additional length corresponding to the braking space necessary to the vehicle to stop;
- the interplate distance must not exceed a threshold value, beyond which braking conditions would be altered, because there would be a significant change of the friction coefficient of the wheel at the ground in the passage region between one plate and the other.

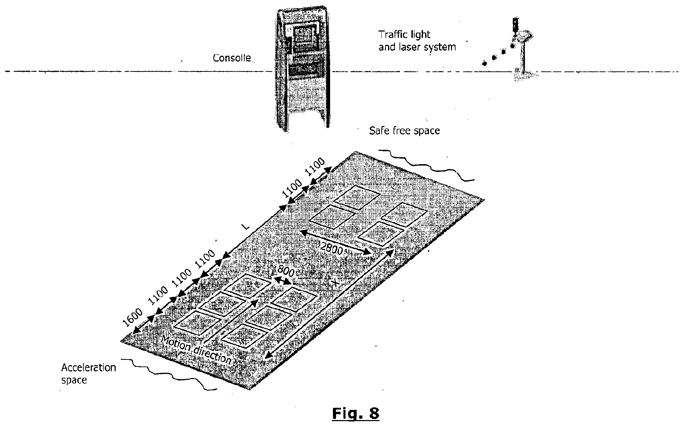

Fig. 8 shows an exemplifying embodiment according to the invention. As illustrated, the system provides a series of detection plates, arranged continuously or preferably discontinuously (that is, two separate groups for the front array and the rear array), with a mutual distance of 5 mm. The illustrated system is provided for three-axle vehicles, with axle distance L + 2 metres between the first (front) axle and the second axle and an overall axle distance not exceeding X. The outer crosswise lane is at most of 2800 mm while the inner one is minimum of 800 mm. The single plates are 1100 mm long so as to be able to operate with vehicles with a minimum axle distance of 1100 mm and wheels having a maximum diameter of 1020 mm.

The arrangement of the single detection plate is not relevant per se for the teaching of the invention. It will hence be possible to use a brake test plate of a known type, suited to detect (for example by suitably arranged load cells) the horizontal forces and the vertical forces acting thereon.

By building a system according to these principles it is possible to check, with a single apparatus, the efficiency of the braking system of any one of the vehicles in circulation with the technical device which is set forth here in the following.

An electronic checking unit simultaneously detects the stress signals coming from all the plates, coordinating them in an original manner with each other. The peculiar features of the system according to the invention can be better appreciated by resorting to a description of the operation method thereof.

After having entered (manually or through automatic detection) in the checking unit the number of the wheel axles of the vehicle, the braking efficiency of which is to be measured, it is proceeded as follows:

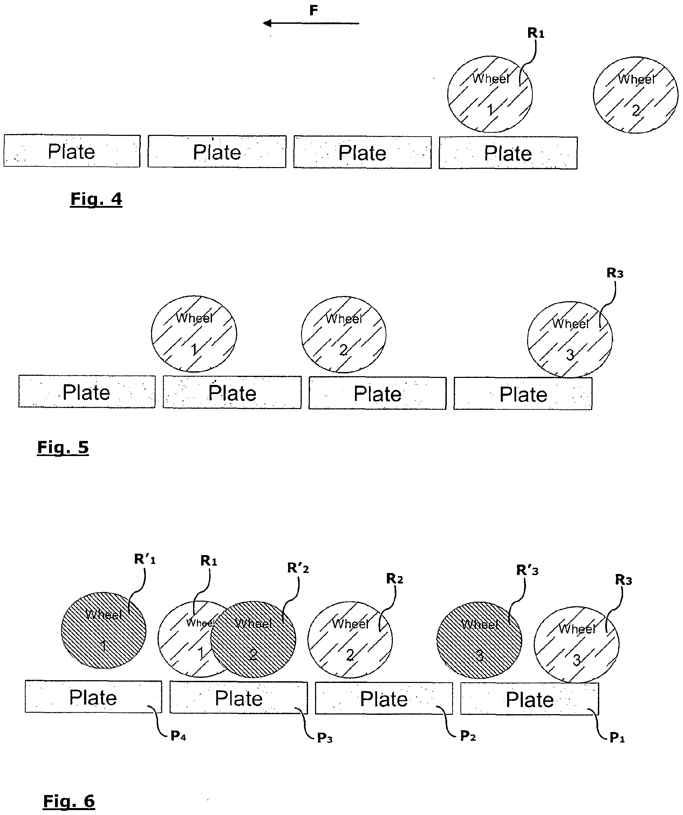

- the vehicle is accelerated up to a preset speed at which the test is to be carried out;
- the vehicle is to run above the platform system at the test speed (fig. 4), causing it to advance (direction F) until all the wheels are on the detection plates;
- in this path it is detected when the wheels get onto the plates determining the instant $T_l$ in which the value of the vertical loading force on the plate changes from a null value to a maximum value; similarly, the instant $T_u$ in which the value of the vertical loading force on the plate changes from a maximum value to a null value indicates the instant when the wheel of that axle get off the plate; the time which elapses between the instant $t_0$ at which the first wheel $R_1$ gets onto a first plate $P_1$ and the instant $t_1$ at which said first wheel $R_1$ gets onto the subsequent plate $P_2$, knowing the length of the plate, allows to calculate the entry speed of the vehicle (which parameter is relevant to establish if the braking action meets rule requirements);

- since the checking unit owns the information relating to the number of axles of wheels of the vehicle, it can easily calculate what the instant $t_s$ is at which all the wheels got onto the plates, that is, when the last wheel $R_3$ - in a three-axle vehicle - has got last onto the first plate $P_1$ (position shown in fig. 5) and the actual braking measurement acquisition can begin; optionally, at this instant $t_s$ a sound or visual signal (see traffic lights system in fig. 8) is issued which warns the operator to begin braking;
- braking is started: the actual beginning of the braking at instant $t_{w1}$ is preferably determined using a suitable sensor which detects the pressure imparted onto the brake pedal, for example with a device as described in EP2806255 in the name of the same Applicant;
- the vehicle performs the braking and all the plates detect the vertical and horizontal stresses transmitted by the vehicle; during this deceleration intervention, the vehicle of course continues to move and the respective wheels move along a same plate and can also move from one plate to the other (precisely because, as stated, the plates are not arranged specifically for a single vehicle); at the end of the braking, that is, at instant $t_{w2}$ when the vehicle is stationary and no significant changes of the stresses are detected any longer, the vehicle will find itself to affect some plates which are not necessarily the same as at the beginning of the braking; more precisely, with reference to fig. 6 (where a comparison between the three axles of wheels is represented in the position at the beginning of the braking $t_{w1}$ - references without superscripts - and at the end of the braking $t_{w2}$ - references with superscripts), it can be noticed that wheel $R_3$ has remained on plate $P_1$, while wheels $R_2$ and $R_1$ have moved onto plates $P_3$ and $P_4$, respectively.

According to the invention, the computing processing, implemented in a suitable software onboard the checking unit, determines and manages this situation of change of the detection plate during the data acquisition period. In particular, in order to be able to acquire the braking stress of each axle, the computing process operates by integrating the measurements detected on two (or more) subsequent plates when it is detected that an axle has moved from one plate to the other (or to multiple plates). As schematised in fig. 6, this operation consists, in the simplest mode, in summing the horizontal forces detected between two subsequent plates affected by the same wheel axle during the braking space; this sum (or integration in more general terms) must hence be performed only in the condition in which the passage of the two wheels of an axle from one plate to the subsequent one is detected. Therefore the checking unit must determine, within the time window of the braking action (hence after the braking start instant), what are the plates from which a wheel has come off and what are the plates onto which a wheel has got on, based on the detection of the vertical stress mainly due to the vehicle weight. In all the cases in which, in the braking time window $t_{w1}$ - $t_{w2}$, a plate $P_n$ has undergone a marked reduction of vertical stress and a subsequent plate $P_{n+1}$ has undergone at least a significant increase of the vertical stress, the checking unit performs a sum or integration of the horizontal stress readings detected by these two plates $P_n$ and $P_{n+1}$.

Summing up, the processing of the data implemented in the checking unit provides to:

- detect when a first axis $R_1$ of the vehicle gets onto a first plate $P_1$; that is performed using the vertical force measurement,
- checking the time necessary for the weight to shift onto the second plate $P_2$, thereby calculating the entry speed of the vehicle;
- determining, based on the piece of data of the number of axles, when all the axles have got on to the measurement system; due to the fact that the length of the plates is smaller than the minimum distance between the axles, it is possible to ascertain the above-said condition counting how many times the vertical force of the previous axle has temporarily dropped to zero, before increasing again due to the weight of the subsequent axle;
- when all the axles have got onto the measurement system, possibly activating a signal which prompts the operator to begin braking;
- establishing that the vehicle has not already begun braking while it is still getting onto the plates, detecting the horizontal component of the force for all the plates and checking that - during the step preliminary to the acquisition of the braking stresses - such force never has a component in the direction and versus opposite to the direction of the progress motion of the vehicle (vice versa, it is possible that there is a force component in the versus of the motion of the vehicle due to the traction force, necessary for the vehicle to be able to get onto the measuring system);
- after the braking start instant, acquiring the braking stress on each plate and for each individual wheel, performing the suitable integrations - as seen further above - when it is assessed that a wheel has moved from one plate to the subsequent one.

With the system according to the invention it is hence possible to acquire the stresses transferred from the braking system of a land vehicle to the detection plates both in stationary conditions and in dynamic conditions, in a wide range of axle configurations of the vehicles. Thereby a more realistic detection is obtained of the behaviour of the braking system, since it is possible to measure both the stationary effects (forces) and the dynamic effects (for example activation delays on the various axles, load transfer, inertial forces).

Due to the opportunity of having a dynamic detection of forces, which can be correctly allotted to each wheel axle, the opportunity opens of detecting further quantities which allow to widen the testing abilities of the system. In particular, according to the invention the detection plates and the processing unit are used also for performing a check of the dampening system of the vehicle.

As a matter of fact, as known, in order to guarantee a certain driving comfort and allow maximum adherence also in conditions of uneven roads, the wheels of a motor vehicle are not rigidly fastened to the vehicle structure, but are mounted on a suspension system. In such respect, a motor vehicle can be modelled from a dynamic point of view as a system in which

the tyre is represented by a mass connected with a spring in parallel to a dampener at the suspension;
the suspension in turn is represented by a spring in parallel to a dampener (shock absorber), connected to the rigid structure of the vehicle which is provided with an own mass, the road surface makes up the stress or applied mechanic force.

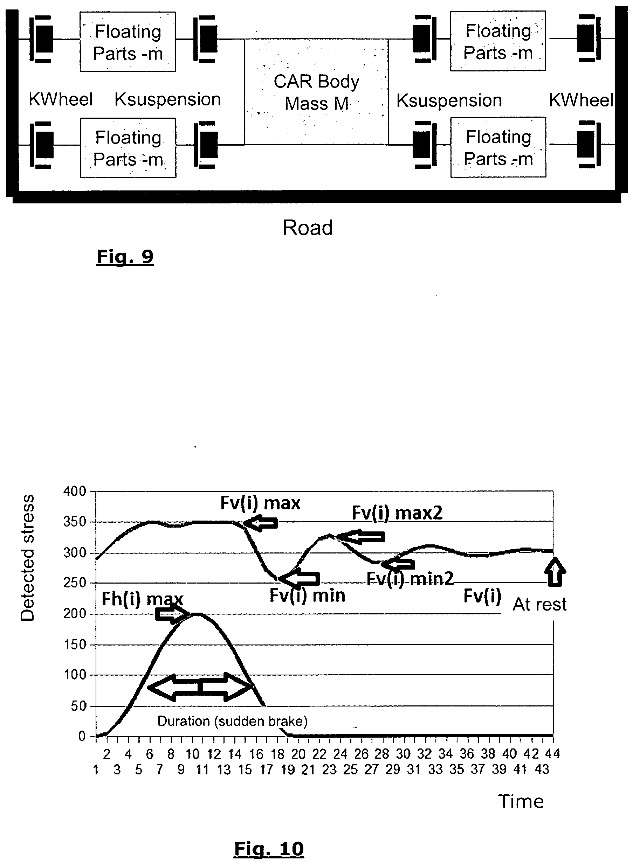

Fig.9 represents the model of a 4-wheel vehicle wherein:

Kwheels represents the tyre model,
Ksuspension represents the suspension model.

The roughness of a road prompts the suspension, through Kwheels, to vibrate; in turn Ksuspension couples the movements of the suspension with those of the vehicle body; in first approximation the suspension vibrates, uncoupling the road roughness to leave the vehicle body substantially stationary. The mass of the suspension, coupled through Ksuspension and Kwheels, behaves like a resonating system which has an own frequency. The vibration of the suspension produces a periodic change of the vertical force on the wheel: such change is highest in correspondence of the resonance frequency of the suspension.

When the applied vertical force drops, the maximum friction force drops proportionately, reducing also the maximum braking efficiency and hence the safety of the vehicle. Also for this reason, hence, there is a significant interaction between the operation of the braking system and the behaviour of the suspension and of the tyre.

Checking systems therefore exist which apply to the tyre a vibration of a fixed width and variable frequency, measuring the vertical force depending on the frequency, checking that the minimum force at the resonance frequency be above a set minimum.

However, the suspension has a fundamental importance also in the management of the vehicle stability during a steering: the moment generated during a swerve changes the distribution of the vertical forces and hence the distribution of the same between the 4 vehicle suspensions. The load change on the suspensions changes the position of the mass centre of the vehicle, for example raising it, and consequently the distribution of the forces into a dangerous positive circle, reducing the vertical force on the single wheel enough to prevent the correct operation thereof.

This feature of the suspension cannot be measured by conventional "vibration" systems indicated above.

According to the invention, the detection plate system ix instead exploited to be able to provide - together with the braking information - also an important indication on the operation of the suspension system.

Assuming to check a 4-wheel vehicle, it must be noticed that during braking, each wheel undergoes a braking force Fh(i) (horizontal, linked to the friction between wheel and plate) and a component of the vehicle weight Fv(i) where i = 1,2,3,4 identifies the 4 wheels (in a 4-wheel vehicle).

With a stationary vehicle, the horizontal components are null and the vertical ones depend on the position of the mass centre of the vehicle with respect to the 4 wheels: Mg = Fv(1) + Fv(2) + Fv(3) + Fv(4). Be d(i) the vector distances (with the components x(i), y(i), z(i) in which x(i) is the distance measured along the displacement axis of the vehicle, y(i) is the distance measured in the orthogonal direction and z(i) in the vertical direction; for a vehicle on a plane it can be assumed that all the z(i) be equal to the height from the ground of the centre of gravity, h) of the 4 points of contact of the wheels with the ground with respect to the centre of gravity. Due to the different point of application of the vehicle mass Mg and of the various Fv(i), in dynamic conditions a moment Mv = d(1)*Fv(1) + d(2)*Fv(2) +d(3)*Fv(3) +d(4)*Fv(4) is generated (which is zero in stationary conditions) which is the one which determines a different distribution on the 4 wheels of the forces Fv(i). Since Fv(i) are vertical forces, hence only with a component along the Z axis, Mv has only components along axes X and Y which meet the following conditions:

$$Mv(x) = Fv(1)*y(1) + Fv(2)*y(2) + Fv(3)*y(3) + Fv(4)*y(4) = 0$$

$$Mv(y) = Fv(1)*x(1) + Fv(2)*x(2) + Fv(3)*x(3) + Fv(4)*x(4) = 0$$

During the braking action it can be assumed that the total braking force, always applied to the mass centre, is equal to the sum of the four horizontal forces Fbraking = Fh(1) + Fh(2) + Fh(3) + Fh(4). Due to the different point of application of the Fbraking and of the various Fh(i), during braking a moment Mh = d(1)*Fh(1) + d(2)*Fh(2) +d(3)*Fh(3) +d(4)*Fh(4) is generated, which moment has three components:

a vertically-oriented component, which tends to cause the vehicle to steer;
a component in the direction of the motion, which tends to change the balancing of the weights between the right

6

and left wheels;

a component orthogonal to the direction of the motion which tends to change the balancing of the weights between front wheels and rear wheels.

Since during braking the vehicle, which vehicle consists of the assembly of body, wheels and suspensions, must not rotate (at least until the system tolerance limits are reached, beyond which the vehicle loses control and adherence to the road), this moment is compensated by a change of the Fv(i) so that Mv + Mh = 0.

The change of the forces applied to the suspensions produces a deformation thereof, which slightly changes the d(i) and hence further changes the attitude of the vehicle when braking.

When the vehicle stops, the horizontal component of the forces Fh(i) drop to zero, and as such the vertical forces return to the rest value thereof; however, the suspensions have accumulated energy due to the change of the forces during braking and release this energy when the braking is over.

As soon as Fh(i) drops to zero, the suspension begins to return towards the rest condition, instantly generating a force equal to the force which had determined the deformation thereof: such force is delivered to the support plane, hence onto the detection plates of the check system of the invention, through Kwheels (which is considered very high) and to the vehicle body, generating a coupled system of harmonic resonators (the 4 suspensions), wherein the resonance frequency depends on the vehicle mass M and on Ksuspension.

Therefore, measuring with the system of the invention the trend of forces Fv(i), at the end of a sudden braking (that is a braking time shorter than the natural settling time of the harmonic system of vehicle plus suspension), it is possible to obtain the operation status of the suspensions.

According to the invention, it is suggested to acquire some significant parameters during the braking test, which then allow to obtain with sufficient reliability the state of health of the suspensions of a vehicle. In particular, the parameters to be acquired are the ones indicated in fig. 10: for each wheel, the vertical force at rest $Fv(i)_{rest}$, the maximum horizontal force $Fh(i)_{max}$, the first two peaks of maximum vertical force $Fv(i)_{max}$ and $Fv(i)_{max2}$ and the first two peaks of minimum vertical force $Fv(i)_{min}$ and $Fv(i)_{min2}$.

With these parameters it is possible to establish a state of the suspension thus characterised:

the forces $Fh(i)_{max}$ are scaled depending on the relative forces Fv(i) at rest, to determine the efficiency of each wheel;
the ratio $Fh(i)_{max}/Fv(i)_{rest}$ between the four wheels must be reasonably even, to remove the event of a wheel not braking and possibly sliding;
the ratio $Fv(i)_{max}/Fv(i)_{rest}$ is a measure of the displacement of the forces caused by moment Mh; the values referred to the wheels on the same axle must not differ by more than a few percentage units; in the contrary there is an evident sign of dissymmetry between the suspensions of the same axle;
the ratio between $(Fv(i)_{max} - Fv(i)_{rest})$ and $(Fv(i)_{min} - Fv(i)_{rest})$ is a measure of the dampening efficiency of the suspension;
the ratio between $(Fv(i)_{max} - Fv(i)_{rest})$ and $(Fv(i)_{max2} - Fv(i)_{rest})$ is a measure of the dampening efficiency of the suspension.

The comparison of the preceding parameters between the wheels of the same axle allows to check any system imbalances, which can cause dangerous overturning moments of the vehicle.

The comparison between these parameters, obtained from the acquisitions provided by the system according to the invention, allows to obtain a measurement of the efficiency of the suspension on the whole, in connection with the road behaviour safety.

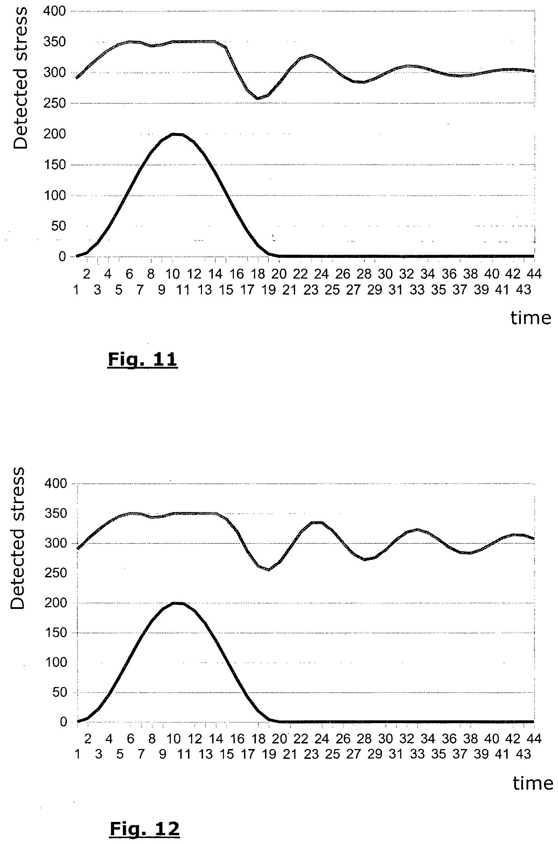

As summarily detectable from the comparison of the two diagrams of figs. 11 and 12, the second system (fig. 12) has a trend of the curve of the forces not equally effective with respect to the first system (fig. 11), denouncing some operation anomaly of the suspensions.

However, it is understood that the invention must not be considered limited to the special arrangements illustrated above, which make up only exemplifying embodiments thereof, but that different variants are possible, all within the reach of a person skilled in the field, without departing from the scope of protection of the invention, as defined by the following claims.

**Claims**

1. Multi-plate system for checking the braking capacity of motor vehicles with at least two wheel axes, comprising pairs of detection plates aligned according to a motion direction on two parallel paths spaced by a distance related to the wheel track, wherein each detection plate has at least a support surface configured with detection means apt to detect horizontal (Fh(i)) and vertical (Fv(i)) components of a stress transferred by the vehicle wheels to such surface, **characterised in that**:

- at least three pairs of aligned detection plates are provided, mutually dimensioned and spaced so as to prevent the wheels of a single axis from simultaneously resting on two pairs of detection plates and that on a same pair of detection plates the wheels of multiple axes from resting simultaneously;
- a checking unit is furthermore provided which detects the development in time of said vertical ($Fv(i)$) and horizontal ($Fh(i)$) components of the stress and which determines when the wheels of an axis get on and off a single detection plate ($Pn$) based on the measurement peaks of said vertical component ($Fv(i)$) of the stress;
- said checking unit has data processing means apt to integrate over time the measurements of said horizontal component ($Fh(i)$) of the stress on a first detection plate ($Pn$) and on the subsequent one ($Pn+1$) when it is detected, within a braking measurement time range ($tw1 - tw2$), that said vertical component ($Fv(i)$) of the stress on said first detection plate ($Pn$) undergoes a significant reduction and said vertical component ($Fv(i)$) of the stress on said subsequent detection plate ($Pn+1$) undergoes a significant increase.

2. Multi-plate system as claimed in 1, **characterised in that** said data processing means are also apt to detect the time elapsed between the initial detection time ($t0$) of a vertical component of the stress on a first plate ($P1$) and an initial detection time ($t1$) of a vertical component of the stress on a subsequent plate ($P2$) for determining a vehicle entry speed in the checking system.

3. Multi-plate system as claimed in 1 or 2, **characterised in that** said checking unit also comprises data input means by which the number ($N$) of vehicle axes is entered in said data processing means, so that the time is determined at which the Nth peak of vertical component of the stress is detected by a first one ($P1$) of said detection plates and an audible/visible signal is provided to an operator to start the braking action and the measuring time range of the braking action ($tw1- tw2$).

4. Checking method of a braking system of a land vehicle equipped with at least two wheel axes, comprising the steps of causing a vehicle to move on a multi-plate system as claimed in any one of the previous claims and performing a detection of the vertical and horizontal components of the stresses transferred by the vehicle wheels to detection surfaces of detection plates, **characterised in that**:

- by detecting the time difference between a peak of the vertical component ($Fv(i)$) of said stresses on a first detection plate ($P1$) and on a subsequent one ($P2$), the vehicle entry speed is determined on the system;
- by entering the number ($N$) of vehicle axes, the time is determined at which the Nth peak of vertical component of the stress is detected by said first detection plate ($P1$) and hence the start of a measuring time range of the braking action ($tw1- tw2$) is determined;
- the stresses on said detection plates in said measuring time range of the braking action ($tw1 - tw2$) are detected;
- the measurements of said horizontal component of the stress ($Fh(i)$) on a detection plate ($Pn$) and on the subsequent one ($Pn+1$) are integrated in time when it is detected, within said measuring time range of the braking action ($tw1- tw2$), that said vertical component ($Fv(i)$) of the stress on said detection plate ($Pn$) undergoes a significant reduction and said vertical component ($Fv(i)$) of the stress on said subsequent detection plate ($Pn+1$) undergoes a significant increase.

5. Method as claimed in 4, wherein before said measuring time range of the braking action ($tw1 - tw2$), said horizontal component ($Fh(i)$) of the stress on the multi-plate system is detected to check that it does not have components in the vehicle motion direction and of the opposite direction.

6. Method as in 4 or 5, wherein for each of the vehicle wheels it is acquired
the parameter of vertical force at rest $Fv(i)rest$, and
during the braking time, also the parameters maximum horizontal force $Fh(i)max$, the first two peaks of maximum vertical force $Fv(i)max$ and $Fv(i)max2$ and the first two peaks of minim vertical force $Fv(i)min$ and $Fv(i)min2$
in order to subsequently determine also a state of operation of the vehicle suspension arrangement **characterised by** said parameters.

**Patentansprüche**

1. Mehrplattensystem zum Überprüfen der Bremsfähigkeit von Kraftfahrzeugen mit mindestens zwei Radachsen, umfassend Paare von Erfassungsplatten, die entlang einer Bewegungsrichtung auf zwei parallelen Pfaden ausgerichtet sind, die um einen auf die Radspur bezogenen Abstand voneinander beabstandet sind, wobei jede Erfassungsplatte mindestens eine Stützfläche aufweist, die mit Erfassungsmitteln ausgelegt ist, die geeignet sind, horizontale (Fh(i)) und vertikale (Fv(i)) Komponenten einer von den Fahrzeugrädern auf diese Fläche übertragenen Belastung zu erfassen, **dadurch gekennzeichnet, dass**:

- mindestens drei Paare von ausgerichteten Erfassungsplatten vorgesehen sind, die gegenseitig dimensioniert und beabstandet sind, um zu verhindern, dass die Räder einer einzigen Achse gleichzeitig auf zwei Paare von Erfassungsplatten aufliegen und dass auf einem gleichen Paar von Erfassungsplatten die Räder mehrerer Achsen gleichzeitig aufliegen;
- eine Prüfeinheit vorgesehen ist, die die zeitliche Entwicklung der vertikalen (Fv(i)) und horizontalen (Fh(i)) Komponenten der Belastung erfasst und basierend auf den Messspitzen der vertikalen Komponente (Fv(i)) der Belastung bestimmt, wann die Räder einer Achse auf eine und von einer einzelnen Erfassungsplatte (Pn) auf- und abfahren;
- die Prüfeinheit Datenverarbeitungsmittel aufweist, die geeignet sind, die Messungen der horizontalen Komponente (Fh(i)) der Belastung auf einer ersten Erfassungsplatte (Pn) und auf der nachfolgenden (Pn+1) über die Zeit zu integrieren, wenn innerhalb eines Bremsmesszeitbereichs (tw1- tw2) erfasst wird, dass die vertikale Komponente (Fv(i)) der Belastung auf der ersten Erfassungsplatte (Pn) eine signifikante Reduzierung erfährt und die vertikale Komponente (Fv(i)) der Belastung auf der nachfolgenden Erfassungsplatte (Pn+1) eine signifikante Erhöhung erfährt.

2. Mehrplattensystem nach Anspruch 1, **dadurch gekennzeichnet, dass** die Datenverarbeitungsmittel auch geeignet sind, die Zeit zu erfassen, die zwischen der anfänglichen Erfassungszeit (t0) einer vertikalen Komponente der Belastung auf einer ersten Platte (P1) und einer anfänglichen Erfassungszeit (t1) einer vertikalen Komponente der Belastung auf einer nachfolgenden Platte (P2) verstrichen ist, um eine Fahrzeugeintrittsgeschwindigkeit in dem Prüfsystem zu bestimmen.

3. Mehrplattensystem nach Anspruch 1 oder 2, **dadurch gekennzeichnet, dass** die Prüfeinheit auch Dateneingabemittel umfasst, mit denen die Anzahl (N) der Fahrzeugachsen in die Datenverarbeitungsmittel eingegeben wird, so dass die Zeit bestimmt wird, zu der die N-te Spalte der vertikalen Komponente der Belastung durch eine erste (P1) der Erfassungsplatten erfasst wird und einem Bediener ein akustisch/sichtbares Signal zum Starten der Bremsung und des Messzeitbereichs der Bremsung (tw1-tw2) bereitgestellt wird.

4. Prüfverfahren für ein Bremssystem eines Landfahrzeugs, das mit mindestens zwei Radachsen ausgestattet ist, umfassend die Schritte: Veranlassen, dass sich ein Fahrzeug auf ein Mehrplattensystem nach einem der vorhergehenden Ansprüche bewegt und Durchführen einer Erfassung der vertikalen und horizontalen Komponenten der von den Fahrzeugrädern auf Erfassungsflächen der Erfassungsplatten übertragenen Belastungen, **dadurch gekennzeichnet, dass**:

- durch Erfassen der Zeitdifferenz zwischen einer Spitze der vertikalen Komponente (Fv(i)) der Belastungen auf eine erste Erfassungsplatte (P1) und auf eine nachfolgenden (P2), die Einfahrtsgeschwindigkeit des Fahrzeugs in dem System bestimmt wird;
- durch Eingabe der Anzahl (N) von Fahrzeugachsen die Zeit bestimmt wird, zu der die N-te Spitze der vertikalen Komponente der Belastung durch die erste Erfassungsplatte (P1) erfasst wird und somit der Beginn eines Messzeitbereichs der Bremswirkung (tw1-tw2) bestimmt wird;
- die Belastungen auf die Erfassungsplatten in dem Messzeitbereich der Bremswirkung (tw1- tw2) erfasst werden;
- die Messungen der horizontalen Komponente der Belastung (Fh(i)) auf einer Erfassungsplatte (Pn) und auf der nachfolgenden (Pn+1) nach der Zeit integriert werden, wenn innerhalb des Messzeitbereichs der Bremswirkung (tw1-tw2) erfasst wird, dass die vertikale Komponente (Fv(i)) der Belastung auf der Erfassungsplatte (Pn) eine signifikante Verringerung erfährt und die vertikale Komponente (Fv(i)) der Belastung auf der nachfolgenden Erfassungsplatte (Pn+1) eine signifikante Erhöhung erfährt.

5. Verfahren nach Anspruch 4, wobei vor dem Messzeitbereich der Bremswirkung (tw1-tw2) die horizontale Komponente (Fh(i)) der Belastung des Mehrplattensystems erfasst wird, um zu überprüfen, dass diese keine Komponenten in der Fahrzeugbewegungsrichtung und in der entgegengesetzten Richtung aufweist.

6. Verfahren nach Anspruch 4 oder 5, wobei für jedes der Fahrzeugräder der Parameter der vertikalen Kraft in Ruhe Fv(i)rest und, während der Bremszeit, auch die Parameter maximale horizontale Kraft Fh(i)max, die ersten beiden Spitzen der maximalen vertikalen Kraft Fv(i)max und Fv(i)max2 und die ersten beiden Spitzen der minimalen vertikalen Kraft Fv(i)min und Fv(i)min2 erfasst werden,

um anschließend auch einen Betriebszustand der Fahrzeugaufhängungsanordnung zu bestimmen, der durch die Parameter gekennzeichnet ist.

**Revendications**

1. Système à multiples plaques pour contrôler la capacité de freinage de véhicules motorisés avec au moins deux essieux de roues, comprenant des paires de plaques de détection alignées selon une direction de déplacement sur deux chemins parallèles espacés par une distance associée à la trace de roue, dans lequel chaque plaque de détection a au moins une surface de support configurée avec des moyens de détection aptes à détecter des composantes horizontale (Fh(i)) et verticale (Fv(i)) d'une contrainte transférée par les roues de véhicule à une telle surface, **caractérisé en ce que** :

   - au moins trois paires de plaques de détection alignées sont fournies, dimensionnées et espacées mutuellement de façon à empêcher les roues d'un seul essieu de reposer simultanément sur deux paires de plaques de détection et que les roues de plusieurs essieux ne reposent pas simultanément sur une même paire de plaques de détection ;
   - une unité de contrôle est en outre fournie qui détecte le développement dans le temps desdites composantes horizontale (Fh(i)) et verticale (Fv(i)) de la contrainte et qui détermine quand les roues d'un essieu montent ou descendent d'une plaque de détection unique (Pn) sur la base de pics de mesure de ladite composante verticale (Fv(i)) de la contrainte ;
   - ladite unité de contrôle a des moyens de traitement de données aptes à intégrer au fil du temps les mesures de ladite composante horizontale (Fh(i)) de la contrainte sur une première plaque de détection (Pn) et sur la plaque subséquente (Pn+1) lorsqu'il est détecté, dans une plage temporelle de mesure de freinage (tw1- tw2), que ladite composante verticale (Fv(i)) de la contrainte sur ladite première plaque de détection (Pn) subit une réduction importante et que ladite composante verticale (Fv(i)) de la contrainte sur ladite plaque de détection subséquente (Pn+1) subit une augmentation importante.

2. Système à multiples plaques selon la revendication 1,
   **caractérisé en ce que** lesdits moyens de traitement de données sont également aptes à détecter le temps écoulé entre le temps de détection initial (t0) d'une composante verticale de la contrainte sur une première plaque (P1) et un temps de détection initial (t1) d'une composante verticale de la contrainte sur une plaque subséquente (P2) pour déterminer une vitesse d'entrée de véhicule dans le système de contrôle.

3. Système à multiples plaques selon la revendication 1 ou 2,
   **caractérisé en ce que** ladite unité de contrôle comprend également des moyens d'entrée de données au moyen desquels le nombre (N) des essieux de véhicule est fourni en entrée auxdits moyens de traitement de données, de telle sorte que le temps est déterminé auquel le Nième pic de la composante verticale de la contrainte est détecté par une première plaque (P1) desdites plaques de détection et un signal audible/visible est fourni à un opérateur pour démarrer l'action de freinage et la plage temporelle de mesure de l'action de freinage (tw1-tw2).

4. Procédé de contrôle d'un système de freinage d'un véhicule terrestre équipé d'au moins deux essieux de roues, comprenant les étapes consistant à entraîner un véhicule à se déplacer sur un système à multiples plaques selon l'une quelconque des revendications précédentes et à effectuer une détection des composantes verticale et horizontale des contraintes transférée par les roues du véhicule aux surfaces de détection des plaques de détection, **caractérisé en ce que** :

   - en détectant la différence temporelle entre un pic de la composante verticale (Fv(i)) desdites contraintes sur une première plaque de détection (P1) et sur une plaque subséquente (P2), la vitesse d'entrée du véhicule est déterminée sur le système ;
   - en fournissant en entrée le nombre (N) d'essieux du véhicule, le temps est déterminé auquel le Nième pic de la composante verticale de la contrainte est détecté par ladite première plaque de détection (P1) et par conséquent le début d'une plage temporelle de mesure de l'action de freinage (tw1-tw2) est déterminé ;
   - les contraintes sur lesdites plaques de détection dans ladite plage temporelle de mesure de l'action de freinage (tw1- tw2) sont détectées ;
   - les mesures de ladite composante horizontale de la contrainte (Fh(i)) sur une plaque de détection (Pn) et sur la plaque subséquente (Pn+1) sont intégrées dans le temps lorsqu'il est détecté, dans ladite plage temporelle de mesure de l'action de freinage (tw1-tw2), que ladite composante verticale (Fv(1)) de la contrainte sur ladite plaque de détection (Pn) subit une réduction importante et ladite composante verticale (Fv(1)) de la contrainte sur ladite plaque de détection subséquente (Pn+1) subit une augmentation importante.

**5.** Procédé selon la revendication 4, dans lequel, avant ladite plage temporelle de mesure de l'action de freinage (tw1-tw2), ladite composante horizontale (Fh(i)) de la contrainte sur le système à multiples plaques est détectée pour vérifier qu'elle n'a pas de composantes dans la direction de déplacement du véhicule et dans la direction opposée.

**6.** Procédé selon la revendication 4 ou 5, dans lequel sont acquis pour chacune des roues de véhicule
le paramètre de force verticale au repos Fv(i)rest, et
pendant le temps de freinage, les paramètres maximaux de force verticale au repos Fv(i)max, les premiers deux pics de force verticale maximale Fv(i)max et Fv(i)max2 et les premiers deux pics de force verticale minimale Fv(i)min et Fv(i)min2
afin de déterminer en outre ensuite un état de fonctionnement de l'agencement de suspension de véhicule **caractérisé par** lesdits paramètres.

**Fig. 1**

**Fig. 2**

**Fig. 3**

F

R₁

Wheel 1

Wheel 2

Plate | Plate | Plate | Plate

**Fig. 4**

R₃

Wheel 1

Wheel 2

Wheel 3

Plate | Plate | Plate | Plate

**Fig. 5**

R′₁  R₁  R′₂  R₂  R′₃  R₃

Wheel 1  Wheel 1  Wheel 2  Wheel 2  Wheel 3  Wheel 3

Plate | Plate | Plate | Plate

P₄  P₃  P₂  P₁

**Fig. 6**

**Fig. 7**

Consolle

Traffic light
and laser system

Safe free space

1100 1100

L

2800

800

1600 1100 1100 1100 1100 1100

Motion direction

Acceleration
space

**Fig. 8**

Road

**Fig. 9**

**Fig. 10**

**Fig. 11**

**Fig. 12**

## REFERENCES CITED IN THE DESCRIPTION

**Patent documents cited in the description**

- US 5305636 A
- US 5979230 A
- US 6481298 B
- EP 2806255 A